(19) Europäisches Patentamt
European Patent Office
Office européen des brevets

(11) **EP 2 862 409 B1**

(12) **EUROPEAN PATENT SPECIFICATION**

(45) Date of publication and mention of the grant of the patent:
**07.08.2019 Bulletin 2019/32**

(21) Application number: **13732321.8**

(22) Date of filing: **13.06.2013**

(51) Int Cl.:
***H04W 76/14*** *(2018.01)*     *H04W 72/08* *(2009.01)*
*H04W 76/23* *(2018.01)*

(86) International application number:
**PCT/US2013/045544**

(87) International publication number:
**WO 2013/188608 (19.12.2013 Gazette 2013/51)**

(54) **METHOD AND APPARATUS FOR OPPORTUNISTIC OFFLOADING OF NETWORK COMMUNICATIONS TO DEVICE-TO-DEVICE COMMUNICATION**

VERFAHREN UND VORRICHTUNG FÜR OPPORTUNISTISCHE ABLADUNG VON NETZWERKKOMMUNIKATIONEN FÜR KOMMUNIKATION ZWISCHEN VORRICHTUNGEN

PROCÉDÉ ET APPAREIL POUR UN DÉLESTAGE OPPORTUNISTE DES COMMUNICATIONS DE RÉSEAU PAR UNE COMMUNICATION ENTRE DISPOSITIFS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.06.2012   US 201213523521**

(43) Date of publication of application:
**22.04.2015   Bulletin 2015/17**

(73) Proprietor: **Alcatel Lucent**
**91620 Nozay (FR)**

(72) Inventors:
• **ZOU, Jialin**
**Murray Hill, NJ 07974-0636 (US)**

• **VASUDEVAN, Subramanian**
**Murray Hill, NJ 07974-0636 (US)**

(74) Representative: **Browne, Robin Forsythe et al**
**Hepworth Browne**
**15 St Paul's Street**
**Leeds LS1 2JG (GB)**

(56) References cited:
**WO-A1-01/15387          WO-A1-2005/053347
WO-A1-2010/038139     US-A1- 2010 009 675
US-A1- 2011 258 313**

EP 2 862 409 B1

**Description**

**BACKGROUND**

In device-to-device communications, user equipments (UEs) communicate with each other. Conventional UEs are equipped to transmit on the uplink and receive on the downlink, while base stations receive on the uplink and transmit on the downlink. Device-to-device communication may be used for at least public safety and social networking.

To improve public safety, device-to-device communication is used where the cellular infrastructure is unavailable. Device-to-device communication allows user equipments (UEs) to communicate with each other directly in emergency situations.

Device-to-device communication is also used in social networking. More specifically, device-to-device communication allows proximate UEs to share information directly.

A wireless network may have multiple UEs communicating through conventional methods on uplink/downlink communication pairs through a serving base station. Some of these multiple UEs may be capable of instead communicating through device-to-device communications with nearby UEs, thereby freeing bandwidth for conventional network-routed communications.

International patent application WO 01/15387 A1 discloses a direct mode communication method between two mobile terminals in access point controlled WLAN systems.

US patent application US 2011/0258313 A1 discloses a network-assisted peer discovery in a mobile telecommunication network.

US patent application US 2010/009675 A1 discloses methods to establish device-to-device communications in a wireless network.

WO 2010/038139 relates to a method that comprises receiving, by an advertising mobile station in a wireless network, a master profile message from an access node, the master profile message comprising, for each of a plurality of mobile stations in the wireless network, a timing parameter and at least one profile element; selecting at least one receiving mobile station from the plurality of mobile stations based, at least in part, on comparing the timing parameter of the receiving mobile station to the timing parameter of the advertising mobile station and checking the at least one profile element of the receiving mobile station against a proposed advertisement; sending a location request message to the at least one receiving mobile station; receiving the location message from the at least one receiving mobile station, the location message indicating a location of the at least one receiving mobile station.

Finally, international patent application WO 2005/053347 A1 discloses a method for establishing P2P communication between two user user equipments, UEs.

**SUMMARY**

Example embodiments are directed to methods and/or apparatuses for opportunistic offloading of network communications to device-to-device communication.

According to a first aspect of the present invention there is provided a method for offloading communications of a first base station, the method in accordance with claim 1. In another aspect of the invention there is provide a base station in accordance with claim 2.

There is disclosed herein a method for offloading communications of a first base station includes determining that a first user equipment (UE) and a second UE are candidates for direct communications. The method further includes notifying the first UE and the second UE that the first UE and the second UE are candidates for direct communications based on the determining. The method further includes receiving a report that the first UE and the second UE are able to engage in direct communications with each other. The method further includes allocating at least one uplink block to direct communications between the first UE and the second UE.

As disclosed herein, the determining further includes determining that the first UE and the second UE are in communications with each other.

As disclosed herein, the determining that the first UE and the second UE are in communications with each other is based on a determination that an identifier of the first UE and an identifier of the second UE are on each other's communicating UE identifier list stored at a serving base station of the first UE and a serving base station of the second UE, respectively.

As disclosed herein, the determining that the first UE and the second UE are candidates for direct communications includes determining that the first UE and the second UE are within a threshold distance of each other.

As disclosed herein, the second UE is served by a second base station. The second base station determines that the second UE is at an edge of a geographic area bordering a geographic area served by the first base station. The first base station determines that the first UE is at an edge of a geographic area bordering a geographic area served by the second base station. The determining that the first UE and the second UE are within a threshold distance is based on at least one measurement transmitted by the second base station to the first base station.

As disclosed herein, the determining whether the first UE and the second UE are within a threshold distance of each other includes determining an angle between the direction from the base station to the first UE and the direction from the base station to the second UE. The determining whether the first UE and the second UE are within a threshold distance of each other further includes determining a time for a signal to be transmitted from the base station to each of the first UE and the second UE. The determining whether the first UE and the second UE are within a threshold distance of each other further includes determining a position of the first UE and the second UE based on the determined angle and the determined time.

As disclosed herein, the received reports from the first UE and the second UE may be based on a link condition between the first UE and the second UE.

As disclosed herein, the link condition may be based on at least one of a measurement of a reference signal transmitted by a least one of the first UE and the second UE and the associated transmission power.

As disclosed herein, the first UE is configured by a serving base station of the first UE to measure the reference signals transmitted by the second UE. The second UE is configured by a serving base station of the second UE to measure the reference signals transmitted by the first UE.

As disclosed herein, the method for offloading communications of a first base station further includes terminating the direct communication between the first UE and the second UE.

As disclosed herein, the terminating may be based on a report that a link condition of the direct communication has deteriorated past a threshold.

As disclosed herein, the method for offloading cellular communications includes determining, by a first base station, that a first user equipment (UE) and a second UE served by the base station are within a threshold distance from each other. The method further includes determining that a third UE served by a second base station is within a threshold distance from at least one of the first UE and the second UE. The method further includes notifying the first UE, the second UE, and the third UE that the first UE, the second UE, and the third UE are candidates for direct communications based on the determining. The method further includes receiving reports indicating that the first UE and the second UE are able to engage in direct uplink communications with each other. The method further includes receiving a second report that the third UE is able to engage in direct communications with at least one of the first UE and the second UE. The method further includes exchanging the notifications and reports between the first base station and the second base station. The method further includes allocating at least one uplink block to direct communications between the first UE and the second UE. The method further includes allocating at least one uplink block to direct communications between the third UE and one of the first UE and the second UE.

As disclosed herein, the method further includes allocating at least one downlink block for downlink communications between the second base station and the third UE. The method further includes allocating at least one uplink block for uplink communications between the second base station and the third UE served by the second base station.

As disclosed herein, a user equipment (UE) is configured to receive notification that the UE is a candidate for direct communication with a second UE. The UE is further configured to determine whether the UE can engage in direct communication with the second UE. The UE is further configured to transmit a confirmation that the UE can engage in direct uplink communication with the second UE based on the determining.

As disclosed herein, a base station is configured to determine that a first user equipment (UE) and a second UE are candidates for direct uplink communications. The base station is further configured to notify the first UE and the second UE that the first UE and the second UE are candidates for direct uplink communications based on the determining. The base station is further configured to receive a report that the first UE and the second UE are able to engage in direct uplink communications with each other. The base station is further configured to allocate at least one uplink block to direct uplink communications between the first UE and the second UE.

As disclosed herein, the base station is further configured to determine that the first UE and the second UE are in communications with each other.

As disclosed herein, the base station determines that the first UE and the second UE are in communications with each other based on a determination that an identifier of the first UE and an identifier of the second UE are on each other's communicating UE identifier list stored at a serving base station of the first UE and the second UE, respectively.

As disclosed herein, the base station is further configured to determine that the first UE and the second UE are within a threshold distance of each other.

As disclosed herein, the second UE is served by a second base station. The second base station determines that the second UE is at an edge of a geographic area bordering a geographic area served by the first base station. The first base station determines that the first UE is at an edge of a geographic area bordering a geographic area served by the second base station. The base station determines that the first UE and the second UE are within a threshold distance based on at least one measurement transmitted by the second base station to the first base station.

As disclosed herein, the base station is configured to determine an angle between the direction from the base station to the first UE and the direction from the base station to the second UE. The base station is further configured to determine a time for a signal to be transmitted to each of the first UE and the second UE. The base station is further configured to determine a position of the first UE and the second UE based on the determined angle and the determined time.

As disclosed herein, the received report is based on a link condition between the first UE and the second UE.

As disclosed herein, the link condition is based on at least one of a measurement of a reference signal transmitted by at least one of the first UE and the second UE and the associated transmission power.

In one embodiment, the first UE is configured by a serving base station of the first UE to measure the reference signals transmitted by the second UE. The second UE is configured by a serving base station of the second UE to measure the reference signals transmitted by the first UE.

As disclosed herein, the base station is further configured to terminate the direct uplink communication between the first UE and the second UE.

As disclosed herein, the terminating is based on a report that a link condition of the direct uplink communication has deteriorated past a threshold.

As disclosed herein, a base station is configured to determine that a first user equipment (UE) and a second UE served by the base station are within a threshold distance from each other. The base station is further configured to determine that a third UE served by a second base station is within a threshold distance from at least one of the first UE and the second UE. The base station is further configured to notify the first UE, the second UE, and the third UE that the first UE, the second UE, and the third UE are candidates for direct uplink communications based on the determining. The base station is further configured to receive a report that the first UE and the second UE are able to engage in direct uplink communications with each other. The base station is further configured to receive a report that the third UE is able to engage in direct uplink communications with at least one of the first UE and the second UE. The base station is further configured to allocate at least one uplink block to direct communications between the first UE and the second UE. The base station is further configured to allocate at least one uplink block to direct communications between the third UE and one of the first UE and the second UE.

As disclosed herein, the base station is further configured to allocate at least one downlink block for downlink communications between the second base station and the third UE. The base station is further configured to allocate at least one uplink block for uplink communications between the second base station and the third UE served by the second base station.

## BRIEF DESCRIPTION OF THE DRAWINGS

Example embodiments will be more clearly understood from the following detailed description taken in conjunction with the accompanying drawings.

FIG. 1 illustrates an example embodiment of a network;

FIG. 2 illustrates an example embodiment of a base station;

FIG. 3 illustrates a method of offloading network-routed communications to direct device-to-device communications according to an example embodiment;

FIG. 4 illustrates a signal flow for offloading network-routed communications to direct device-to-device communications;

FIGS. 5 and 6 illustrate example systems in which a proximity determination is made;

FIG. 7 illustrates a signal flow for a step of determining whether two devices are candidates for device-to-device communication according to an example embodiment;

FIG. 8 illustrates a signal flow for termination of direct device-to-device communications;

FIG. 9 illustrates a further example embodiment of a network; and

FIG. 10 illustrates a method of inter-cell network traffic offloading.

## DETAILED DESCRIPTION

Various example embodiments will now be described more fully with reference to the accompanying drawings in which some example embodiments are illustrated.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.*, "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of example embodiments and corresponding detailed description are presented in terms of software, or algorithms and symbolic representations of operation on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more Central Processing Units (CPUs), digital signal processors (DSPs), application-specific-integrated-circuits, field programmable gate arrays (FPGAs) computers or the like.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

Note also that the software implemented aspects of example embodiments are typically encoded on some form of tangible (or recording) storage medium. The tangible storage medium may be magnetic (e.g., a floppy disk or a hard drive) or optical (e.g., a compact disk read only memory, or "CD ROM"), and may be read only or random access. Example embodiments are not limited by these aspects of any given implementation.

It will be understood that the D2D proximity discovery methods according to example embodiments are generic and can be employed to activate the D2D bearer of the same cellular carrier frequency, different carrier frequency or other Radio Access Technology (RAT) such as WiFi.

As used herein, the term "user equipment" (UE) may be synonymous to a mobile user, mobile station, mobile terminal, user, subscriber, wireless terminal and/or remote station and may describe a remote user of wireless resources in a wireless communication network. The term "base station" may be understood as a one or more cell sites, enhanced Node-Bs (eNB), base stations, access points, and/or any terminus of radio frequency communication. Although current network architectures may consider a distinction between mobile/user devices and access points/cell sites, the example embodiments described hereafter may generally be applicable to architectures where that distinction is not so clear, such as ad hoc and/or mesh network architectures, for example.

The term "channel" may be understood as any combination of frequency band allocation, time allocation and code allocation.

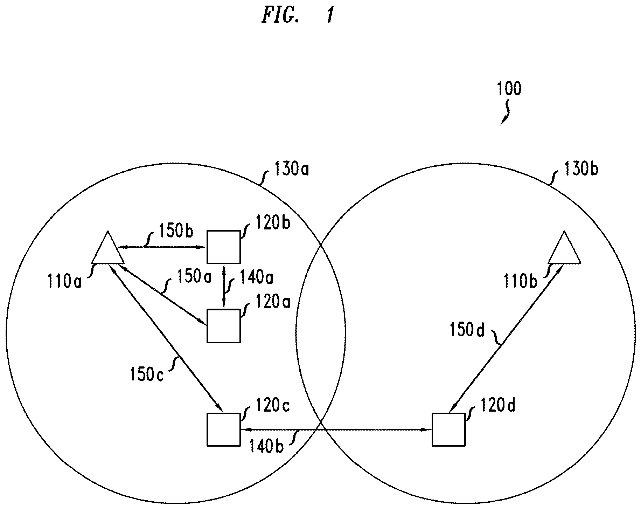

FIG. 1 illustrates a network in which example embodiments are implemented. As shown in FIG. 1, a network 100 includes at least two base stations 110a and 110b and UEs 120a-120d. The base stations 110a and 110b may be enhanced Node-Bs (eNBs), for example. The base stations 110a and 110b may serve geographic areas 130a, 130b known as cells. As shown in FIG. 1, for example, base station 110a serves UEs located within cell 130a and base station 110b serves UEs located within cell 130b. It will be understood that base stations 110a and 110b may serve other UEs, not shown. It will further be understood that cell 130a may include a large number of UEs and neighboring cell 130b may include a relatively smaller number of UEs.

In LTE systems, the uplink is orthogonal frequency division multiplexed (OFDM) with different users being allocated time-frequency blocks known as physical resource blocks (PRBs). In the example embodiment shown in FIG. 1, the base stations 110a and 110b schedule UEs within cells 130a and 130b, respectively to transmit data on these PRBs on an uplink traffic channel known as the Physical Uplink Shared Channel (PUSCH). In the example embodiment shown in FIG. 1, therefore, base station 110a may schedules UE 120a, 120b and 120c to transmit data on the PUSCH. Base station 110a may further schedule other UEs located in cell 130a, not shown, to transmit data on the PUSCH. Similarly, base station 110b may schedule UE 120d to transmit data on the PUSCH. Base station 110b may further schedule other UEs located in cell 130b, not shown, to transmit data on the PUSCH.

UEs transmit feedback and control information on Physical Uplink Control Channel (PUCCH). Feedback and control information may include, for example, downlink transmission acknowledgments and downlink channel quality feedback. There may be full resource re-use across cells such that PRBs may be re-used in adjacent geographic cells.

Each UE 120a-120d communicates with its serving base station 110a or 110b via communication links 150a-150d, respectively.

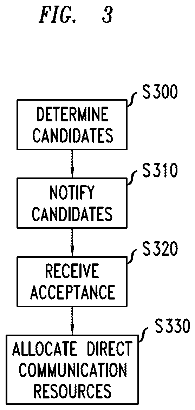

In at least one example embodiment, UEs 120a and 120b further receive on a direct communication channel 140a, which can be in the uplink frequency and channel format for example, in order to receive data from a UE peer in a device-to-device communication. The base station 110a allocates PRBs for device-to-device communications on the uplink channel. The base station 110a further allocates PRBs on the uplink channel for communications between the base station 110a and UEs served by base station 110a. The base station 110a may thereby offload traffic that would typically be routed through the base station 110a, via uplink and downlink channels between the UEs and the base station, to a direct connection between certain UEs 120a and 120b. In an example embodiment, the direct connection is in the uplink format. This offloading is referred to hereinafter as intra-cell offloading. Methods for intra-cell offloading are discussed in further detail with respect to FIGS. 3-8 below.

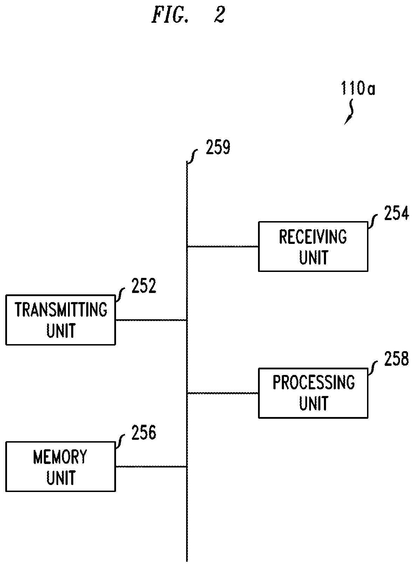

FIG. 2 illustrates an example embodiment of the base station 110a. It should also be understood that the base station 110a may include features not shown in FIG. 2 and should not be limited to those features that are shown. It should also be understood that base station 110b may include the same or similar features as those discussed with respect to base station 110a.

Referring to FIG. 2, the base station 110a may include, for example, a data bus 259, a transmitting unit 252, a receiving unit 254, a memory unit 256, and a processing unit 258.

The transmitting unit 252, receiving unit 254, memory unit 256, and processing unit 258 may send data to and/or receive data from one another using the data bus 259. The transmitting unit 252 is a device that includes hardware and any necessary software for transmitting wireless signals including, for example, data signals, control signals, and signal strength/quality information via one or more wireless connections to other network elements in the wireless communications network 100.

The receiving unit 254 is a device that includes hardware and any necessary software for receiving wireless signals including, for example, data signals, control signals, and signal strength/quality information via one or more wireless connections to other network elements in the network 100.

The memory unit 256 may be any device capable of storing data including magnetic storage, flash storage, etc.

The processing unit 258 may be any device capable of processing data including, for example, a microprocessor configured to carry out specific operations based on input data, or capable of executing instructions included in computer readable code. The computer readable code may be stored on, for example, the memory unit 256.

For example, the processing unit 258 is capable of determining when UEs are within a communication range. The processing unit 258 is capable of notifying UEs within communication range that the UEs are candidates for device-to-device communication. The processing unit 258 is further capable of receiving an indication of acceptance of device-to-device communication and the data report from candidate UEs. The processing unit 258 is also configured to allocate resources to direct communication links. For example, the processing unit 258 is configured to allocate uplink channel PRBs to direct communication links on links 150a or 150b.

As is known, in order for device-to-device communications to proceed, it is advantageous to know whether UEs are within a range of each other such that device-to-device communications is possible. Known UE-only ad hoc systems rely on UEs themselves to discover their proximity to each other. However, this places a large burden on the UEs such that the cost of such mobile devices is prohibitive.

Additionally, known systems require UEs to continuously transmit a pilot or sounding reference signal for other UEs to capture in order to determine proximate UEs. Continuously transmitting such a signal may lead to large power draws by the UEs and reduced efficiency.

Other known systems that rely on network-controlled, rather than UE-controlled, device-to-device communication may rely on user applications to determine candidate UEs within device-to-device proximity. Such known systems may rely on global positioning systems (GPSs), implemented on the UEs. A UE using a GPS application is able to determine which UEs are in device-to-device proximity based on actual locations of other UEs. However, this strategy still places burdens on UEs and may lead to further power requirements for UEs if continuous GPS tracking is required.

Further, this GPS strategy may not allow for opportunistic local inter-cell and intra-cell offloading. Offloading, controlled and determined by a base station 110a, may not be optimized if the procedure must rely on the presence of a GPS application on UEs for which communications are to be offloaded. The offloading additionally may not be optimized because the offloading may rely on a decision made by a distant application server serving at least the GPS application.

Intra-cell Offloading

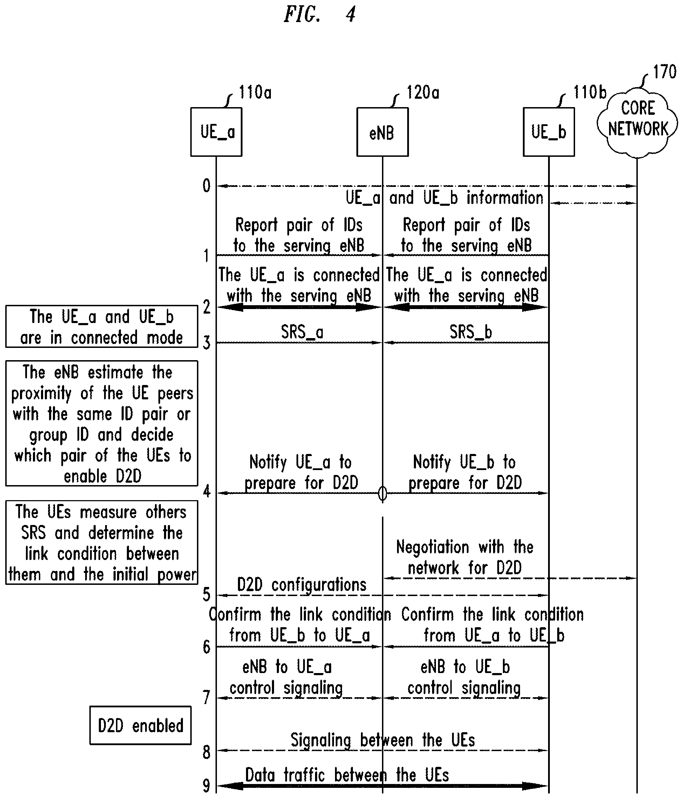

FIG. 3 illustrates a method, controlled by a base station 110a, for intra-cell offloading of network-routed communications to device-to-device communications. FIG. 4 is a signal diagram that illustrates the signaling for implementing the offloading by device-to-device communications. Communications may be offloaded to direct uplink communications between devices determined to be candidates for such device-to-device communications. The method shown in FIG. 3 is discussed with reference to base station 110a.

As shown, at S300, the base station 110a determines candidate UEs 120a and 120b for device-to-device communications. The base station 110a determines candidate UEs 120a and 120b by determining whether UEs 120a and 120b are communicating.

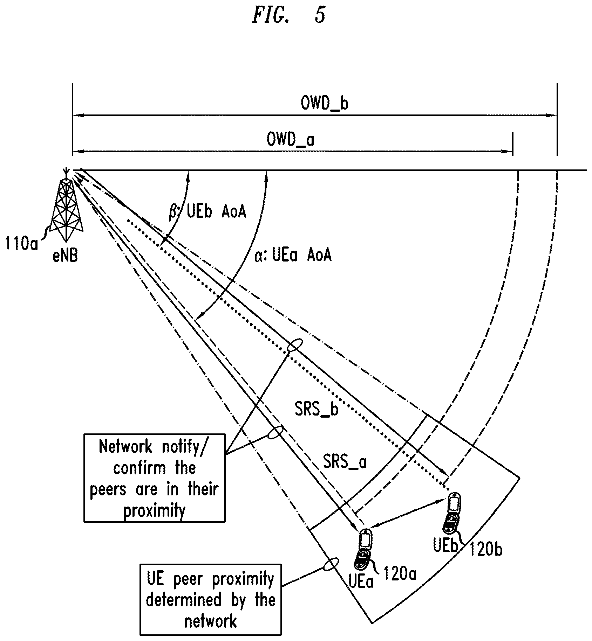

Additionally, the base station 110a may determine whether UEs 120a and 120b are within a threshold proximity to each other. However, it will be understood that base station 110a may instead rely on UE measurement reports to determine whether opportunistic offload will be possible. Step S300 is discussed in detail with reference to FIGS. 4 and 5.

With reference to FIG. 4, when UE 120a and UE 120b begin communications with each other, the UE 120a and UE 120b exchange identification information with each other in signal 0, routed through a core network 170. The identifiers may be International Mobile Subscriber Identity (IMSI) identifiers, IP addresses, or any other known identifier. The serving base station(s) of communicating UEs 120a and 120b exchange and store each other's identification information for the duration of the call.

In addition to the known call setup procedure, UE 120a and UE 120b each report 1 a pair of identifiers to their serving base station 110a. The pair of identifiers identifies each of the communicating parties UE 120a and UE 120b. In this way, the serving base station 110a determines that UE 120a and UE 120b are in communication with each other, and UEs 120a and 120b may be candidates for device-to-device communication.

It will be understood that UE 120a and 120b may be served by different base stations, in which case UE 120a and UE 120b's pair of identifiers are maintained by their serving base stations, respectively. Furthermore, upon handover to the new serving base station, the original serving base station will transfer the identifier pair to the new serving base station. In a further example embodiment, if one of UE 120a and 120b move to a different cell served by a different base station, that UE 120a or 120b will report the stored identifier pair to the new serving base station.

Referring again to FIG. 4, signal 2, UE 120a and UE 120b are in communication with serving base station 110a. However, it will be understood that UE 120a and UE 120b may be in communication with different serving base stations (not shown). At step 3, UE 120a and 120b periodically transmit Sounding Reference Signals (SRSs) to serving base station 110a.

In an example embodiment, base station 110a further determines whether UEs 120a and 120b are proximate enough to each other to engage in device-to-device communications. However, in at least another example embodiment, the burden may be placed on UEs 120a and 120b to determine whether UEs 120a and 120b are proximate to each other. In at least one example embodiment, the UEs 120a and 120b may use a GPS application to determine whether UEs 120a and 120b are proximate enough to each other.

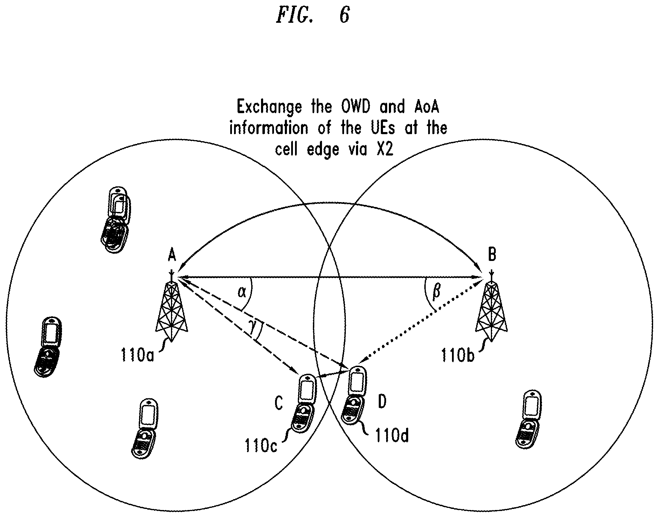

The proximity determination, performed by base station 110a, is discussed in detail with reference to FIGS. 5 and 6.

Referring to FIG. 5, it is known that a base station 110a can measure the Angle of Arrival (AoA) and the One Way Delay (OWD) of the received signals of a UE 120a and 120b. Using AoA and OWD together, the base station 110a can estimate the location of a UE 120a or 120b. The base station 110a can determine a device-to-device proximity based on the estimated location of two UEs 120a and 120b. With the above method, the base station 110a can itself determine the proximity of UEs 120a and 120b to each other, without reliance on costly applications.

More accurate means may be available for a network-side element to estimate geographical locations of UEs. These may include, for example, Observed Time Difference of Arrival (OTDOA), Uplink Time Difference of Arrival (UTDOA), GPS etc. However, any of these means require more UE measurement and reporting. The complexity involved and UE power consumption become an issue when continuous location tracking and reporting is required. Taking the advantage of the fact that proximity estimation does not require precise knowledge of the locations of the UEs, the currently existing AoA and OWD information measured by the base station 110a can be used to determine device-to-device proximity with sufficient accuracy. However, in at least one example embodiment, the more accurate means for estimation of geographical locations of UEs could be used.

Referring again to FIG. 5, based on the received signal from a UE 120a or 120b, the base station 110a determines the OWD from the UE 120a and 120b to the base station 110a. As is known, the OWD is one-half the Round Trip Delay (RTD) measured by the base station 110a. The AoA, as is known, is the angle at which signals arrive at base station 110a from UEs 120a and 120b.

The base station 110a, in at least one example embodiment, defines an OWD criterion and an AoA criterion. If both of these criteria are met, the base station 110a determines that UEs 120a and 120b are proximate enough to engage in device-to-device communications.

The OWD criterion may be defined as:

$$\left| OWD\_a - OWD\_b \right| \times 3 \times 10^{5}\, m/ms < TH \tag{1}$$

where *OWD_a* is ½ of the Round Trip Delay from UE 120a to the base station 110a in milliseconds,
*OWD_b* is ½ of the Round Trip Delay from UE 120b to the base station 110a in milliseconds, and
TH is a maximum proximity distance. For example, a typical maximum proximity distance is 200m.

The AoA criterion may be defined as:

$$\frac{1}{2} \times (OWD\_a + OWD\_b) \times 3 \times 10^{8} \times (AoA\_a - AoA\_b) \times 2\Pi/360 < TH \tag{2}$$

It will be understood that the accuracy of the proximity estimation depends on the resolutions of AoA and OWD measurement at the base station 110a. With regard to resolutions of AoA measurements, as an illustrative example, as specified in Evolved Universal Terrestrial Radio Access (E-UTRA)-Requirements for support of radio resource management (3GPP Specification TS 36.133), the resolution of AoA measurement at the base station 110a is 0.5 degrees. A worst case situation would be for a UE at the cell edge:

$$ISD \times \pi \times 0.5/360 \tag{3}$$

For an Inter-Site Distance (ISD, or distance between base stations) of 500 meters, the resolution is 2.14m. For ISD = 1732 m, the resolution is 7.55m. These resolutions are sufficiently accurate for proximity estimation.

With regard to resolution of OWD measurements, the current timing advance (TA) mechanism is based on the Round Trip Delay (RTD) measurement at the base station 110a. The TA command specified in LTE standards documents has a resolution of 0.52 μs, which translates to a distance resolution of about 150 meters. This resolution would not be considered sufficiently accurate for proximity estimation. However, the base station 110a may in fact perform oversampling, in which case the internal resolution in the base station is higher than the resolution of the timing parameter in the TA message. A more accurate OWD resolution can thereby be achieved. Therefore, it could be reasonably assumed that base station 110a could achieve a more accurate time at a resolution of, for example, 100ns, which would result in an OWD measurement resolution of around 30 m. This resolution would be considered sufficiently accurate for proximity estimation.

FIG. 6 illustrates a proximity determination for systems in which two UEs 120c and 120d are served by different base stations 110a and 110b.

In at least one example embodiment, base station 110a determines that UE 120c is at a cell edge shared with another base station 110b. This determination is based on the AoA and OWD measurements for UE 120d with respect to base station 110a. Similarly, base station 110b determines that UE 120d is at a cell edge shared with base station 110a, based on the AoA and OWD measurements for UE 120d with respect to base station 110b.

Once base station 110a and 110b determine the presence of UEs 120c and 120d at the shared cell edges, base station 110c reports the AoA, OWD, and UE ID list for UE 120c to base station 110b. In an example embodiment, the known X2 connection is used for this transmission.

Based on the received AoA and OWD information for UE 120d, and knowing the location of itself and of base station 110b, the base station 110a is able to determine an angle $\alpha$ and thereby the distance between base station 110a and UE 120d. Based on the AoA and OWD of UE 120c, the base station 110a determines angle $\gamma$ and the base station 110a estimates a distance between base station 110a and UE 120c and between base station 110a and UE 120d. Base station 110a determines whether UE 120c and UE 120d are within a threshold proximity based on AoA and OWD criteria as discussed above with respect to FIG. 5.

Referring again to FIG. 3, the base station 110a, in step 310, notifies UEs 120a and 120b that UEs 120a and 120b are candidates for device-to-device communication.

Referring to FIG. 4, in signaling step 4, the base station notifies UEs 120a and 120b that UEs 120a and 120b should prepare for device-to-device communications. The notification message includes at least SRS configuration settings. The base station 110a sends in the notification message 4, to UE 120a, SRS configuration settings for UE 120b. Similarly, the base station 110a sends in the notification message 4, to UE 120b, SRS configuration settings for UE 120a. UEs 120a and 120b use SRS configuration settings to avoid a situation in which the device-to-device link is not good enough even when UEs 120a and 120b are very close.

The UE 120a uses the configuration settings of UE 120b in order to measure SRS values of UE 120b. Similarly, the UE 120b uses the configuration settings of UE 120a to measure SRS values of UE 120b.

In signal 5, the base station 110a sends, to UE 120a and 120b, further device-to-device configuration parameters. Furthermore, negotiations 5 are conducted with the core network 170 for device-to-device communication.

Based on SRS measurements taken using SRS configuration settings, UE 120a and UE 120b transmit at step 6 a confirmation report that the link conditions on link 140a are sufficiently good for device-to-device communication.

Referring again to FIG. 3, in step S320, the base station 110a receives the report from UE 120a and UE 120b that link conditions are sufficient for device-device-communications. In step S330, the base station 110a allocates at least one uplink physical resource block (PRB) to direct device-to-device communication between UE 120a and UE 120b, thereby offloading traffic that typically would have been routed through base station 110a.

Referring to FIG. 4, the base station 110a conduct the scheduling control of UEs 120a and 120b through control signaling at step 7 over the PDCCH. UEs 120a and 120b continue to provide reports including, for example, buffer status, power headroom, and SRS measurement, over the PUSCH.

In message 8, signaling exchanges occur between UE 120a and 120b over the direct connection. These exchanges include, for example acknowledgement/non-acknowledgment (ACK/NAK) messages. In message 9, data traffic is transmitted over the direct link between UE 120a and UE 120b.

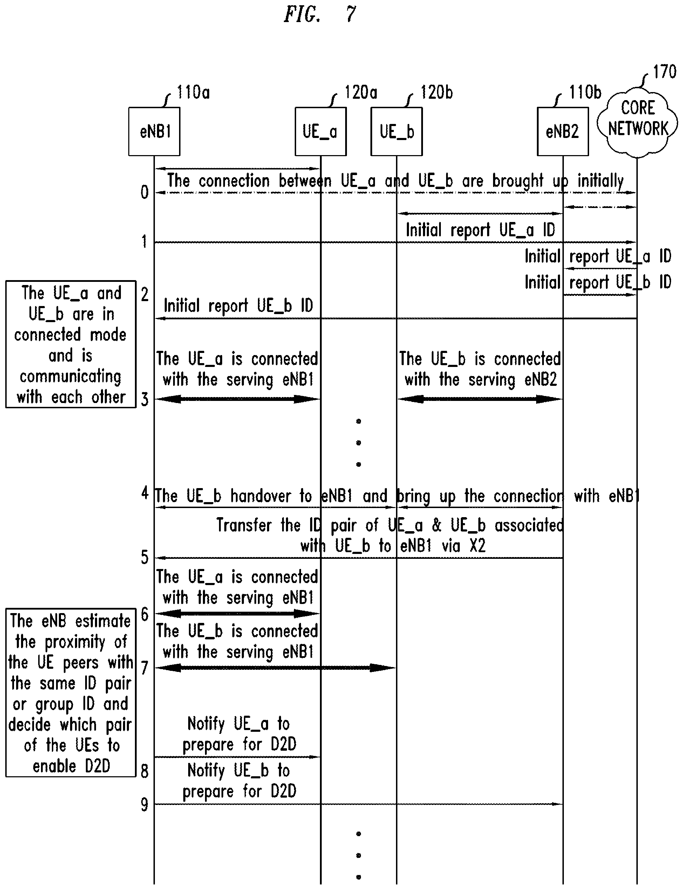

FIG. 7 shows an example of call flows for building up the "connect UE ID list" and maintaining the list with the serving cell when handover is performed by a UE.

At signal 0, a connection is initially enabled between UE 120a and 120b. Based on known call set-up procedures, the identifier (for example, the IMSI) of each of UE 120a and 120b is available at the serving base station 110a and 110b for each UE, respectively.

The base stations 110a and 110b determine that UEs 120a and 120b, respectively, are at a cell edge. At signaling steps 1 and 2, in order that each base station 110a and 110b may know that UEs 120a and 120b are in communication, base station 110a initially reports the identifier for UE 120a to base station 110b through the core network. Base station 110b maintains a "connected UE ID list" for UE 120b and adds the identifier for UE 120a to the connected UE ID list. Similarly, base station 110b initially reports the identifier for UE 120b to base station 110a through the core network, and base station 110a adds this identifier to the connected UE ID list for UE 120a.

At signaling step 3, UEs 120a and 120b conduct their communication through connections with base station 110a and base station 110b respectively.

At signaling step 4, based on the normal mobility procedures, UE 120b is handed over to base station 110a.

At signaling step 5, the base station 110b transfers the connected UE ID list associated with UE 120b to base station 110a over the X2 connection. At steps 6 and 7, each of UE 120a and 120b are connected to serving base station 110a. After the proximity of the two UEs is determined by the base station 110a, at signaling steps 8 and 9, the base station 110a notifies UE 120a and UE 120b to prepare for device-to-device communications.

Device-to-device link termination

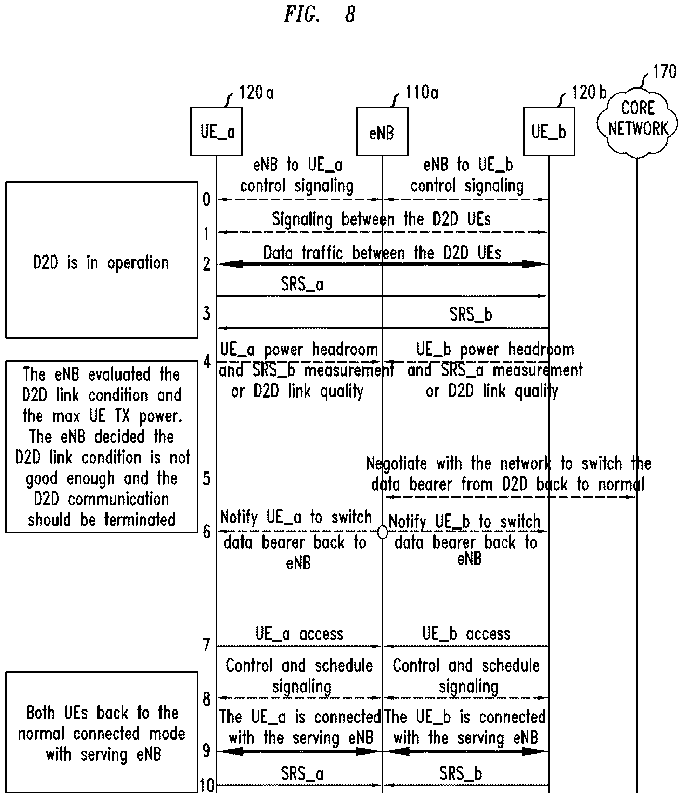

Base station 110a may determine that the device-to-device link should be terminated. In at least one embodiment, base station 110a may determine this when the two UEs 120a and 120b under device-to-device communication move away from each other. The determination may further be based on shadowing losses due to structures between UE 120a and UE 120b. The determination may further be based on penetration loss due to signals losing transmission power upon transmission through walls or other structures. In at least one or all of these situations, or any other known loss or signal degradation situations, the direct link may not be able to support the device-to-device communications. Details of this termination are discussed below with reference to FIG. 8.

At signaling step 0 through 3, in FIG. 8, the UEs 120a and 120b are controlled for device-to-device communication. Specifically, at 3, UEs 120a and 120b transmit SRSs in the format specified in current standards.

At signaling step 4, the UEs 120a and 120b will continue to measure the SRS for the other UE, based on the configuration settings received previously when base station 110a set up the device-to-device communication between UE 120a and UE 120b. The UEs 120a and 120b further report their power headroom and SRS measurements to the base station 110a. The base station 110a may terminate the device-to-device communication based on the received measurements, which provide an indication of UE 120a and UE 120b received signal quality. Specifically, the base station 110a may terminate the device-to-device communication if the signal-to-noise ratio (SNR) falls below a threshold and no power headroom remains for increasing the UEs transmission power for a time period.

At signaling step 5, the base station 110a notifies the core network that the device-to-device communication between UE 120a and UE 120b will be switched back to conventional UE/base station communication. All the necessary preparations and re-configurations will be conducted.

At signaling step 6, the base station 110a notifies the UEs 120a and 120b that UEs 120a and 120b must switch back to conventional UE/base station communication.

At signaling step 7, the UEs 120a and 120b start the access process to connect back to base station 110a. In at least one embodiment, the scheduler of base station 110a may track the link conditions between each UE 120a and 120b and directly enable the connection between UE 120a and 120b and the base station 110a. In such a case, signaling step 7 may be skipped.

At steps 8 through 10, both UEs 120a and 120b resume a normal connected mode with serving base station 110a.

Signaling is similar if UE 120a and 120b are served by different base stations, for example if UE 120a is served by base station 110a and UE 120b is served by base station 110b. In at least one example embodiment, base station 110a transmits a notification via the X2 link to base station 110b to prepare for termination of device-to-device communication. Base station 110a transmits the termination request to the core network 170, and the core network 170 notifies both base station 110a and base station 110b when termination preparations are complete. At this point, base station 110a notifies UE 120a that UE 120a must switch back to UE/base station communication, and base station 110b likewise notifies UE 120b that UE 120b must switch back to UE/base station communication.

Inter-cell offloading

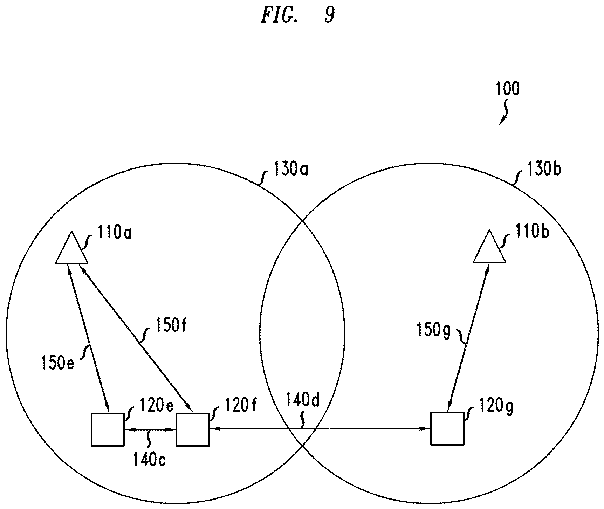

FIG. 9 illustrates a system in which inter-cell offloading is implemented. Inter-cell offloading may be implemented, for example, if base station 110a, serving UEs in cell 130a, determines that a neighboring cell 130b, served by base station 110b, is relatively lightly-loaded.

System elements for inter-cell offloading are similar to those described in FIG. 1. In FIG. 9, at least two UEs (three UEs in the illustrative embodiment) form a relay chain between a heavily loaded cell 130a and a more lightly-loaded cell 130b. UEs 120e and 120f are served by base station 110a. UE 120g is served by base station 110b.

In at least one example embodiment, UEs 120e and 120f further receive on an uplink channel 150c in order to receive data from a UE peer in a device-to-device communication. UEs 120f and 120g further receive on an uplink channel 140d in order to receive data from a UE peer in a device-to-device communication. At least UE 120f is near a cell edge with neighboring cell 130b, served by base station 110b.

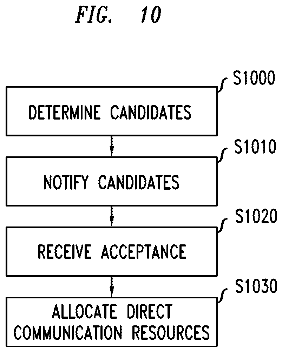

The base station 110a may offload all traffic that would typically be routed through the uplink and downlink with base station 110a to a more lightly-loaded base station 110b. For example, traffic between base station 110a and UE 120e may instead occur over a relay of device-to-device connections such that the communications instead occurs between base station 110b, which serves a more lightly-loaded cell, and UE 120f. This offloading is referred to hereinafter as inter-cell offloading. The method of inter-cell offloading is discussed below with reference to FIG. 10.

Referring to FIG. 10, when a cell 130a is overloaded, the base station 110a determines S1000 the proximity, according to methods discussed previously with respect to intra-cell offloading, between multiple UEs 120e, 120f and 120g. At least one of the UEs, UE 120e, is at a border area with neighboring cell 130b.

The base station 110a determines a relay route for device-to-device connections between a on the border area and at least one UE in the neighboring cell 130b. In an example embodiment, the base station 110a may first estimate the number of UEs that the base station 110a serves. The base station 110a may first select the UE 120e with high traffic volume that is relatively close to the lightly-loaded cell 130b as a candidate for relay offload. In a further example embodiment, the base station 110a may use the previously-described UE location estimation method to determine another UE 120f that is in the proximity of UE 120e and at a direction towards the cell 130b relative to UE 120e. After UE 120f is identified, the base station 110a uses UE 120f as a reference to further determine whether another UE 120g, in the proximity of UE 120f and connected to the cell 130b, can be identified. In example embodiments, the base station 110a determines the offload candidates and the relay route based on the UE location information. If, for one candidate, the base station 110a cannot develop an offload route, the base station 110a selects a different UE candidate and the base station 110a initiates a new search for a different relay route.

In at least one example embodiment, the base station 110a then notifies S1010 each UE 120e, 120f, 120g in the route that UEs 120e, 120f, 120g should prepare to be enabled for device-to-device communication. In order to perform this notification, the base station 110a uses procedures similar to those discussed above for cases in which two UEs are connected to different base stations.

In at least one example embodiment, the base station 110a notifies UE 120g by communicating in a path through X2 to the base station 110b and from base station 110b to the UE 120g. In example embodiments, the device-to-device link between UE 120e and UE 120f is established following the above-described procedure for two UEs under the same serving base station. The device-to-device link between UE 120f and UE 120g is established following the above procedure for two UEs under two serving base stations.

As discussed above regarding intra-cell offload, the base station 110a receives S1020 a report from all of UEs 120e, 120f, and 120g that the links 140c, 140g in the route are of sufficient quality to permit device-to-device communication. The report from UE 120g is first delivered to its serving base station 110b. Then 110b will forward the report to 110a via X2. PRBs are allocated in step S1030 on the uplink channels to device-to-device communications between the UEs in the relay chain.

In the relay case, UE 120g receives data from UE 120f and transmits the data to the base station 110b. UE 120g receives data from base station 110b and transmits data to UE 120f, and both the receiving and transmitting processes are scheduled by base station 110b. Base station 110b, instead of base station 110a, now carries the traffic of UE 120e, thereby reducing traffic load for overloaded base station 110a. In this manner, UE 120e receives services from base station 110b through a relay of device-to-device links 140c, 140d and a conventional UE/base station communication link 150g between UE 120g and base station 110b.

It will be noted the intra-cell offloading procedure departs from the inter-cell offloading procedure at least in that there is no initial determination as to whether the UEs in the chain are already communicating with each other. Further, in contrast to the intra-cell offloading procedure, the last UE in the chain is served by base station 110b, so that communications are offloaded to that base station 110b.

According to illustrative embodiments, operators can offload network-routed communications onto device-to-device communication links. Proximity of candidate UEs for device-to-device communications may be determined at the radio access network level, thereby reducing the complexity and power requirements of UEs engaged in device-to-device communications and avoiding the dependency on the application server, while allowing for an increased geographical range in which direct device-to-device communications is possible for any given pair of UEs.

**Claims**

1. A method for offloading communications of a first base station (110a), the method comprising:

    determining that a first user equipment "UE" (120a) and a second UE (120b) are candidates for direct communications, wherein the step of determining is executed by the first base station (110a) by determining whether said first UE and said second UE are communicating and are within a threshold distance of each other;
    notifying, by the first base station, the first UE and the second UE that the first UE and the second UE are candidates for direct communications based on the determining;
    receiving, by the first base station, a report from both the first UE and the second UE informing that the first UE and the second UE are able to engage in direct communications with each other; and
    allocating, by the first base station, at least one physical resource block "PRB" of an uplink channel to direct communications between the first UE and the second UE,
    wherein:

        the second UE is served by a second base station (110b),
        the second base station determines that the second UE is at an edge of a geographic area (130b) bordering a geographic area served by the first base station (130a) and transmits measurement information related to said determination to the first base station,

the first base station determines that the first UE is at an edge of a geographic area bordering a geographic area served by the second base station, and

the determining that the first UE and the second UE are within a threshold distance is based on at least the measurement information transmitted by the second base station to the first base station.

2. A first base station (110a), configured to:

determine that a first user equipment "UE" and a second UE are candidates for direct uplink communications by determining whether said first UE and said second UE are communicating and are within a threshold distance of each other and wherein the second UE is served by a second base station (110b);

notify the first UE and the second UE that the first UE and the second UE are candidates for direct uplink communications based on the determining;

determine that the first UE is at an edge of a geographic area bordering a geographic area served by the second base station;

receive from the second base station measurement information related to the fact that the second base station has determined that the second UE is at an edge of a geographic area (130b) bordering a geographic area served by said first base station, and wherein the determining that the first UE and the second UE are within a threshold distance is based on at least the measurement information received by the first base station from the second base station; and based on said determinations allocate at least one physical resource block "PRB" of an uplink channel to direct uplink communications between the first UE and the second UE.

3. The first base station of claim 2, wherein the determining that the first UE and the second UE are in communications with each other is based on a determination that an identifier of the first UE and an identifier of the second UE are on each other's communicating UE identifier list stored at a serving base station of the first UE and the second UE, respectively.

**Patentansprüche**

1. Verfahren zum Offload von Kommunikationen einer ersten Basisstation (110a), wobei das Verfahren folgende Schritte umfasst:

- Bestimmen, dass eine erste Benutzervorrichtung "UE" (120a) und eine zweite Benutzervorrichtung UE (120b) Kandidaten für direkte Kommunikationen sind,

wobei der Schritt des Bestimmens von der ersten Basisstation (110a) ausgeführt wird, indem bestimmt wird, ob die erste UE und die zweite UE kommunizieren und innerhalb eines Schwellwertabstands zueinander liegen;

- Benachrichtigen der ersten UE und der zweiten UE durch die erste Basisstation, dass die erste UE und die zweite UE Kandidaten für direkte Kommunikationen sind, basierend auf dem erfolgten Bestimmen;

- Empfangen einer Mitteilung, sowohl von der ersten UE als auch von der zweiten UE, durch die erste Basisstation, die benachrichtigt, dass die erste UE und die zweite UE in der Lage sind, direkte Kommunikationen miteinander zu führen; und

- Zuweisen von mindestens einem physikalischen Ressourcenblock "PRB" eines Uplink-Kanals durch die erste Basisstation, um direkte Kommunikationen zwischen der ersten UE und der zweiten UE zu führen, wobei:

- die zweite UE von einer zweiten Basisstation (110b) bedient wird,

- die zweite Basisstation bestimmt, dass sich die zweite UE an einem Rand eines geografischen Gebiets (130b) befindet, das an ein geografisches Gebiet angrenzt, das von der ersten Basisstation (130a) bedient wird, und Messinformationen bezüglich des Bestimmens an die erste Basisstation überträgt,

- die erste Basisstation bestimmt, dass sich das erste UE an einem Rand eines geografischen Gebiets befindet, das an ein von der zweiten Basisstation bedientes geografisches Gebiet angrenzt, und

- Bestimmen, dass sich die erste UE und die zweite UE innerhalb eines Schwellwertabstands befinden, zumindest auf der Basis der Messinformationen, die von der zweiten Basisstation an die erste Basisstation übertragen werden.

2. Erste Basisstation (110a), die für Folgendes konfiguriert ist:

- Bestimmen, dass eine erste Benutzervorrichtung "UE" und eine zweite Benutzervorrichtung UE Kandidaten für direkte Uplink-Kommunikationen sind, indem bestimmt wird, ob die erste UE und die zweite UE miteinander kommunizieren und innerhalb eines Schwellwertabstands zueinander liegen, und
wobei die zweite UE von einer zweiten Basisstation (110b) bedient wird;
- Benachrichtigen der ersten UE und der zweiten UE, dass die erste UE und die zweite UE Kandidaten für direkte Uplink-Kommunikationen sind, auf der Basis von dem erfolgten Bestimmen sind;
- Bestimmen, dass sich die erste UE an einem Rand eines geografischen Gebiets befindet, das an ein von der zweiten Basisstation bedientes geografisches Gebiet angrenzt;
- Empfangen von Messinformationen von der zweiten Basisstation, die sich auf die Tatsache beziehen, dass die zweite Basisstation bestimmt hat, dass sich die zweite UE an einem Rand eines geografischen Gebiets (130b) befindet, das an ein von der ersten Basisstation bedientes geografisches Gebiet angrenzt, und
wobei das Bestimmen, dass die erste UE und die zweite UE innerhalb eines Schwellwertabstands liegen, zumindest auf den Messinformationen basiert, die von der ersten Basisstation von der zweiten Basisstation empfangen werden; und, basierend auf dem Bestimmen, Zuweisen von mindestens einem physikalischen Rcssourcenblock "PRB" eines Uplink-Kanals für Uplink-Kommunikationen zwischen der ersten UE und der zweiten UE.

3. Erste Basisstation nach Anspruch 2,
wobei das Bestimmen, dass die erste UE und die zweite UE miteinander in Verbindung stehen, auf einem Bestimmen basiert, dass ein Identifikator der ersten UE und ein Identifikator der zweiten UE sich auf der kommunizierenden UE-Identifikatorliste der jeweils anderen befinden, die in einer bedienenden Basisstation der ersten UE und der zweiten UE gespeichert ist.

## Revendications

1. Procédé de déchargement des communications d'une première station de base (110a), le procédé comprenant :

la détermination qu'un premier équipement utilisateur "EU" (120a) et un deuxième équipement utilisateur EU (120b) sont candidats à des communications directes, selon lequel l'étape de détermination est exécutée par la première station de base (110a) en déterminant si ledit premier EU et ledit deuxième EU sont en communication et se trouvent dans une distance seuil l'un de l'autre ;
la notification, par la première station de base, du premier EU et du deuxième EU que le premier EU et le deuxième EU sont candidats à des communications directes sur la base de la détermination ;
la réception, par la première station de base, d'un rapport en provenance à la fois du premier EU et du deuxième EU informant que le premier EU et le deuxième EU peuvent entrer en communications directes l'un avec l'autre ; et
l'allocation, par la première station de base, d'au moins un bloc de ressources physique "BRP" d'un canal de liaison montante afin de diriger des communications entre le premier EU et le deuxième EU, selon lequel :

le deuxième EU est desservi par une deuxième station de base (110b) ;
la deuxième station de base détermine que le deuxième EU se trouve à un bord d'une zone géographique (130b) limitrophe d'une zone géographique desservie par la première station de base (130a) et transmet des informations de mesure liées à ladite détermination à la première station de base ;
la première station de base détermine que le premier EU se trouve à un bord d'une zone géographique limitrophe d'une zone géographique desservie par la deuxième station de base ; et
la détermination que le premier EU et le deuxième EU se trouvent dans une distance seuil l'un de l'autre est basée sur au moins les informations de mesure transmises par la deuxième station de base à la première station de base.

2. Station de base première (110a), configurée pour:

déterminer qu'un premier équipement utilisateur "EU" et un deuxième équipement utilisateur EU sont candidats à des communications directes de liaison montante, en déterminant si ledit premier EU et ledit deuxième EU sont en communication et se trouvent dans une distance seuil l'un de l'autre et selon lequel le deuxième EU est desservi par une deuxième stations de base (110b) ;
notifier le premier EU et le deuxième EU que le premier EU et le deuxième EU sont candidats à des communications directes de liaison montante sur la base de la détermination ;
déterminer que le premier EU se trouve à un bord d'une zone géographique limitrophe d'une zone géographique desservie par la deuxième station de base ;

recevoir en provenance de la deuxième station de base des informations de mesure liées au fait que la deuxième station de base a déterminé que le deuxième EU se trouve à un bord d'une zone géographique (130b) limitrophe d'une zone géographique desservie par ladite première station de base, et selon lequel la détermination que le premier EU et le deuxième EU se trouvent dans une distance seuil est basée sur au moins les informations de mesure reçues par la première station de base en provenance de la deuxième station de base ; et

sur la base desdites déterminations, allouer au moins un bloc de ressources physique "BRP" d'un canal de liaison montante afin de diriger des communications de liaison montante entre ledit premier EU et le deuxième EU.

3. Station de base première selon la revendication 2, selon laquelle la détermination que le premier EU et le deuxième EU sont en communication l'un avec l'autre est basée sur une détermination qu'un identifiant du premier EU et un identifiant du deuxième EU se trouvent dans la liste respective d'identifiants de communication d'EU stockée au niveau d'une station de base servante du premier EU et du deuxième EU, respectivement.

FIG. 1

FIG. 2

110a

259

254

RECEIVING
UNIT

252

TRANSMITTING
UNIT

258

PROCESSING
UNIT

256

MEMORY
UNIT

*FIG. 3*

## FIG. 4

FIG. 5

FIG. 6

Exchange the OWD and AoA
information of the UEs at the
cell edge via X2

FIG. 7

The connection between UE_a and UE_b are brought up initially

Initial report UE_a ID

Initial report UE_a ID

Initial report UE_b ID

| The UE_a and UE_b are in connected mode and is communicating with each other | Initial report UE_b ID |
| --- | --- |

The UE_a is connected with the serving eNB1

The UE_b is connected with the serving eNB2

The UE_b handover to eNB1 and bring up the connection with eNB1

Transfer the ID pair of UE_a & UE_b associated with UE_b to eNB1 via X2

The UE_a is connected with the serving eNB1

| The eNB estimate the proximity of the UE peers with the same ID pair or group ID and decide which pair of the UEs to enable D2D | The UE_b is connected with the serving eNB1 |
| --- | --- |

Notify UE_a to prepare for D2D

Notify UE_b to prepare for D2D

## FIG. 8

FIG. 9

FIG. 10

```
┌──────────────────────────────┐ ⌐ S1000
│    DETERMINE CANDIDATES       │
└──────────────────────────────┘
              ↓
┌──────────────────────────────┐ ⌐ S1010
│     NOTIFY CANDIDATES         │
└──────────────────────────────┘
              ↓
┌──────────────────────────────┐ ⌐ S1020
│    RECEIVE ACCEPTANCE         │
└──────────────────────────────┘
              ↓
┌──────────────────────────────┐ ⌐ S1030
│     ALLOCATE DIRECT           │
│  COMMUNICATION RESOURCES      │
└──────────────────────────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0115387 A1
- US 20110258313 A1
- US 2010009675 A1
- WO 2010038139 A
- WO 2005053347 A1